# EUROPÄISCHE PATENTSCHRIFT

(11) **EP 0 651 528 B1**
(45) Veröffentlichungstag und Bekanntmachung des Hinweises auf die Patenterteilung: **22.01.2003**
(21) Anmeldenummer: 93117601.0
(22) Anmeldetag: 29.10.1993
(51) Int. Cl.: H04J 14/02, H04B 10/213

(54) **Optisches, transparentes Ringnetz mit Ersatzschaltwegen**
Optical transparent ring network with redundant paths
Réseau optique transparent en anneau avec voies de réserve

(43) Veröffentlichungstag der Anmeldung: 03.05.1995
(73) Patentinhaber: SIEMENS AKTIENGESELLSCHAFT, 80333 München (DE)
(72) Erfinder: Huber, Manfred N, Dr.-Ing., D-82166 Gräfelfing (DE); Osborne, Robert, Dr.-Ing., D-81371 München (DE)

(56) Entgegenhaltungen:
- ICC93, Nr.2, 23. Mai 1993, GENEVA, CH Seiten 1245 - 1251, XP371271 A.F. ELREFAIE 'Multiwavelength Survivable Ring Network Architectures'
- ICC88, Bd.3, 12. Juni 1988, PHILADELPHIA, US Seiten 1490 - 1496, XP10891 KAI Y. ENG 'A MULTI-FIBER RING ARCHITECTURE FOR DISTRIBUTED LIGHTWAVE NETWORKS'

## Beschreibung

Vor dem Hintergrund eines ständig zunehmenden Bedarfs an Übertragungskapazität in Kommunikationsnetzen bieten optische, transparente Ringnetze mit Wellenlängenmultiplex, bei denen die Signalübertragung auch in den als add-/drop-Multiplexern ausgebildeten Ringknoten rein optisch erfolgt, einen erfolgversprechenden Ansatz.

Die Erfindung betrifft ein optisches Ringnetz mit den Merkmalen des Oberbegriffs des Anspruchs 1.

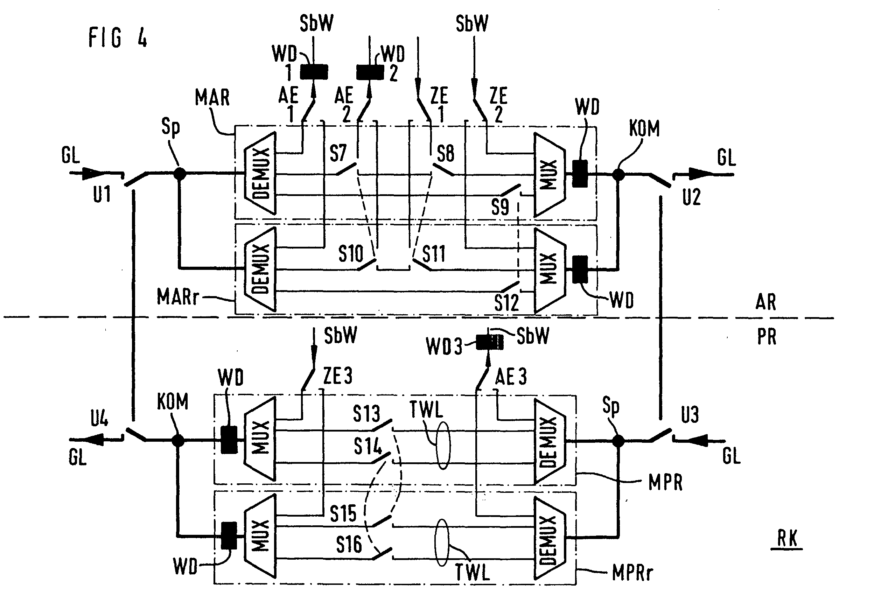

Aus dem Tagungsbericht des ICC 1993 Workshop "Challenges of All Optical Networks", Geneva, 27 May 1993, Paper 13/1, ist aus dem Beitrag "Evolution of Self-Healing interoffice Ring Networks" Seite 95, Figur 4.19, "BSHR/4 with passive protection rings ist ein gattungsgemäßes, optisches Ringnetz bekannt.

Aus ICC 1993, Nr. 2, 23. Mai 1993, Geneva, CH Seiten 1245 bis 1251, XP371271 A.F. Elrefaie "Multiwavelength Survivable Ring Network Architectures" ist eine Architektur für die Implementierung eines unidirektionalen und bidirektionalen selbstheilenden, Vermittlungsstellen verbindendes Netzwerk bekannt, das sich der WDM (Wavelength Division Multiplexing) Technologie bedient. Der Arbeitsring verwendet rein optische add-/drop-Multiplexer an jeder Vermittlungsstelle und der Überwachungsring benutzt optische Verstärker und optische Schalter.

Der Erfindung liegt das Problem zugrunde, ein optisches, transparentes Ringnetz anzugeben, bei dem die Signale zwischen den Ringknoten im Wellenlängenmultiplex übertragen werden, bei dem ein Signal einer gegebenen Wellenlänge in beliebigen Ringknoten einkoppelbar, durchschaltbar oder auskoppelbar sind und bei dem Ersatzschaltwege schaltbar sind.

Das Problem wird bei dem eingangs umrissenen Ringnetz durch die Merkmale des kennzeichnenden Teils von Anspruch 1 gelöst.

Die Erfindung bringt neben einer flexiblen Bereitstellung von Übertragungswegen eine erhöhte Verfügbarkeit der Übertragungswege mit sich.

In weiteren Ausgestaltung der Erfindung sind die signalführenden Einrichtungen eines Ringknotens gedoppelt vorhanden, wobei bezüglich eines Signals nur eine der gedoppelten Einrichtungen signalführend ist. Diese Maßnahme bringt eine weitere Erhöhung der Verfügbarkeit der Übertragungswege mit sich.

Die weiteren Maßnahmen betreffen vorteilhafte Weiterbildung zum Betrieb des Ringnetzes.

Die Erfindung wird nun als Ausführungsbeispiel in einem zum Verständnis erforderlichen Umfang näher beschrieben. Dabei zeigen:
Fig 1 eine prinzipielle Darstellung eines unidirektionalen, transparenten, optischen Ringnetzes mit Wellenlängenmultiplex,
Fig 2 eine prinzipielle Darstellung eines Ringknotens für Multicast-Betrieb des Ringnetzes,
Fig 3 eine prinzipielle Darstellung eines Ringnetzes mit einem Arbeitsring und einem Überwachungsring,
Fig 4 eine prinzipielle Darstellung eines Ringknotens eines Ringnetzes mit Arbeitsring und Überwachungsring, wobei ringspezifische Module redundant ausgebildet sind.

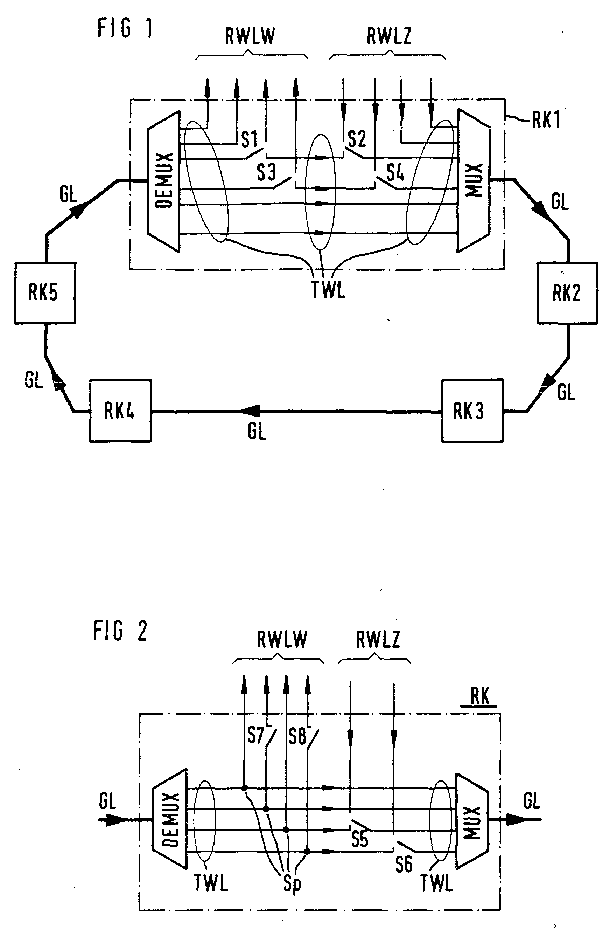

Fig 1 zeigt ein die Erfindung nicht unmittelbar betreffendes, mit einer Mehrzahl von Ringknoten RK gebildetes, optisch transparentes Ringnetz, bei dem benachbarte Ringknoten über jeweils eine optische Signale mit unterschiedlichen Wellenlängen führende Glasfaserleitung GL im Ring verbunden sind. Der Ringknoten RK1 läßt nähere Einzelheiten einer besonderen Ausgestaltung eines Ringknotens erkennen. Das optische Signale heranführende Ende der Glasfaserleitung ist in dem Ringknoten mit einem herkömmlichen Demultiplexer DEMUX verbunden, der ihm eingangsseitig zugeführte, optische Signale nach Maßgabe ihrer Wellenlänge einzelnen, mit dem Demultiplexer ausgangsseitig verbunden und als Tangential-Wellenleiter TWL bezeichneten Wellenleiter zuführt. Die Tangential-Wellenleiter, die im wesentlichen in tangentialer Richtung zum Ringnetz verlaufen, führen also jeweils ein optisches Signal mit einer individuellen Wellenlänge. Die beiden mit dem Demultiplexer verbundenen und in der Figur ganz oben dargestellten Tangential-Wellenleiter sind als jeweils ein optisches Signal mit einer einzigen Wellenlänge im wesentlichen in radialer Richtung vom Ringnetz weiterleitende Radial-Wellenleiter RWLW weitergeführt. Die beiden mit dem Demultiplexer verbundenen und in der Fig 1 in der Mitte dargestellten Tangential-Wellenleiter sind wahlweise über eine Schalteinrichtung S1 bzw. über eine Schalteinrichtung S3 mit jeweils einem Radial-Wellenleiter oder über die Schalteinrichtung S1 und die Schalteinrichtung S2 bzw. über die Schalteinrichtung S3 und die Schalteinrichtung S4 mit einem herkömmlichen Multiplexer MUX verbindbar. Der Multiplexer ist eingangsseitig mit einer Mehrzahl von Tangential-Wellenleitern und ausgangsseitig mit einer Glasfaserleitung verbunden und führt die jeweiligen auf den einzelnen Tangential-Wellenleitern herangeführten Signale zu einem auf der Glasfaserleitung geführten Gesamtsignal zusammen. Die beiden mit dem Demultiplexer verbundenen und in Fig 1 unten dargestellten Tangential-Wellenleiter sind fest mit dem Multiplexer verbunden. Über zwei jewerls ein optisches Signal mit einer einzigen Wellenlänge dem Ringnetz in radialer Richtung zuführenden Radial-Wellenleiter RWLZ können via die Schalteinrichtung S2 bzw. über die Schalteinrichtung S4 dem Multiplexer diese Signale zugeführt werden. Ist der Demultiplexer über die Schalteinrichtung S1 und die Schalteinrichtung S2 bzw. über die Schalteinrichtung S3 und die Schalteinrichtung S4 verbunden, so werden die auf den betreffenden Tangential-Wellenleitern geführten optischen Signale mit der spezifischen Wellenlänge durch den Ringknoten durchgeschaltet und verbleiben in dem Ringnetz. Ebenso werden auch die auf den in Figl ganz unten dargestellten Tangential-Wellenleitern geführten optischen Signale durchgeschaltet. Für den Fall, daß der Demultiplexer über die Schalteinrichtung S1 bzw. über die Schalteinrichtung S3 mit dem zugehörigen, Signale weiterleitenden Radial-Wellenleiter verbunden ist, wird das in dem zugehörigen Tangential-Wellenleiter geführte optische Signal von dem Ringnetz weitergeleitet. Die Wellenlänge eines Signals, das in einem Ringknoten ausgekoppelt wurde, kann für die Einkopplung eines anderen optischen Signals mit dieser Wellenlänge in diesem Ringknoten benutzt werden. Eine Nutzung der Wellenlänge eines ausgekoppelten Signals in dem selben Ringknoten ist nicht zwingend. Eine erneute Nutzung der Wellenlänge eines ausgekoppelten Signals kann in einem anderen Ringknoten erfolgen.

Fig 2 zeigt eine die Erfindung nicht unmittelbar betreffende, alternative Ausgestaltung eines Ringknotens. Einem Demultiplexer DEMUX werden über eine Glasfaserleitung GL optische Signale mit unterschiedlichen Wellenlängen zugeführt. Der Demultiplexer splittet die optischen Signale nach Maßgabe ihrer Wellenlänge auf optische Signale einer einzigen Wellenlänge führende Tangential-Wellenleiter auf. Die beiden in Fig 2 oben dargestellten Tangential-Wellenleiter sind unmittelbar mit dargestellten Tangential-Wellenleiter sind fest mit dem Multiplexer verbunden. Über zwei jeweils ein optisches Signal mit einer einzigen Wellenlänge dem Ringnetz in radialer Richtung zuführenden Radial-Wellenleiter RWLZ können via die Schalteinrichtung S2 bzw. über die Schalteinrichtung S4 dem Multiplexer diese Signale zugeführt werden. Ist der Demultiplexer über die Schalteinrichtung S1 und die Schalteinrichtung S2 bzw. über die Schalteinrichtung S3 und die Schalteinrichtung S4 verbunden, so werden die auf den betreffenden Tangential-Wellenleitern leitern geführten optischen Signale mit der spezifischen Wellenlänge durch den Ringknoten durchgeschaltet und verbleiben in dem Ringnetz. Ebenso werden auch die auf den in FIG 1 ganz unten dargestellten Tangential-Wellenleitern geführten optischen Signale durchgeschaltet. Für den Fall, daß der Demultiplexer über die Schalteinrichtung S1 bzw. über die Schalteinrichtung S3 mit dem zugehörigen, Signale weiterleitenden Radial-Wellenleiter verbunden ist, wird das in dem zugehörigen Tangential-Wellenleiter geführte optische Signal von dem Ringnetz weitergeleitet. Die Wellenlänge eines Signals, das in einem Ringknoten ausgekoppelt wurde, kann für die Einkoppelung eines anderen optischen Signals mit dieser Wellenlänge in diesem Ringknoten benutzt werden. Eine Nutzung der Wellenlänge eines ausgekoppelten Signals in dem selben Ringknoten ist nicht zwingend. Eine erneute Nutzung der Wellenlänge eines ausgekoppelten Signals kann in einem anderen Ringknoten erfolgen.

FIG 2 zeigt eine alternative Ausgestaltung eines Ringknotens. Einem Demultiplexer DEMUX werden über eine Glasfaserleitung GL optische Signale mit unterschiedlichen Wellenlängen zugeführt. Der Demultiplexer splittet die optischen Signale nach Maßgabe ihrer Wellenlänge auf optische Signale einer einzigen Wellenlänge führende Tangential-Wellenleiter auf. Die beiden in FIG 2 oben dargestellten Tangential-Wellenleiter sind unmittelbar mit einem Multiplexer MUX verbunden und die beiden unten dargestellten Tangential-Wellenleiter sind über eine Schalteinrichtung S5 bzw. S6 mit dem Multiplexer verbindbar. Der Multiplexer leitet die einzelnen auf den Tangential-Wellenleitern herangeführten optischen Signale als Gesamtsignal auf eine Glasfaserleitung GL weiter. Die in der FIG 2 als oberster und als zweitunterster dargestellten Tangential-Wellenleiter sind über herkömmliche optische Verzweigungseinrichtungen Sp unmittelbar mit optische Signale von dem Ringnetz weiterleitenden Radial-Wellenleitern RWLW verbunden. Die in FIG 2 als zweitoberster und als unterster dargestellten Tangential-Wellenleiter sind jeweils über eine Verzweigungseinrichtung und eine Schalteinrichtung S7 bzw. S8 mit optische Signale von dem Ringnetz weiterleitenden Radial-Wellenleitern verbunden. Im übrigen sind die beiden in der FIG 2 als unterste dargestellte und mit dem Multiplexer verbundene Tangential-Wellenleiter über eine Schalteinrichtung S5 bzw. S6 mit zwei optische Signale dem Ringnetz zuführende Radial-Wellenleiter RWLZ verbindbar. Die einem Ringknoten nach FIG 2 über die Glasfaser zugeführten optischen Signale können sowohl aus dem Ringnetz ausgekoppelt als auch im Ringnetz an den nächstfolgenden Ringknoten weitergeleitet werden. Der Ringknoten nach FIG 2 bietet in einem Ringnetz die Möglichkeit, ein optisches Signal an einer Mehrzahl von Ringknoten auszukoppeln (Multicast-Betrieb). Der in FIG 2 als oberster dargestellte Tangential-Wellenleiter ist einerseits mit dem Multiplexer und andererseits mit einem ein optisches Signal weiterleitenden Radial-Wellenleiter fest verbunden. Der in FIG 2 als zweitoberster dargestellte Tangential-Wellenleiter ist einerseits mit dem Multiplexer fest verbunden und andererseits über eine Schalteinrichtung S7 mit einem ein optisches Signal weiterleitenden Radial-Wellenleiter verbindbar. Der in FIG 2 als zweitunterste dargestellte und mit dem Demultiplexer verbundene Tangential-Wellenleiter ist über die Schalteinrichtung S5 mit dem Multiplexer verbindbar. Der in FIG 2 als unterster dargestellte und mit dem Demultiplexer verbundene Tangential-Wellenleiter ist einerseits über die Schalteinrichtung S8 mit einem ein optisches Signal weiterleitenden Radial-Wellenleiter und über die Schalteinrichtung S6 mit dem Multiplexer verbindbar.

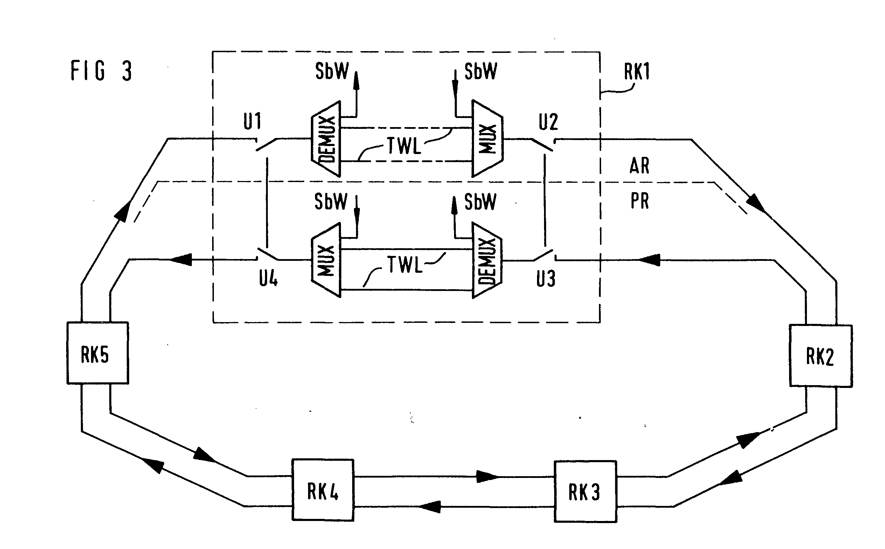

FIG 3 zeigt ein eine Mehrzahl von Ringknoten RK aufweisendes Ringnetz. Bei diesem Ringnetz ist dadurch, daß benachbarte Ringknoten zum einen jeweils über eine Glasfaserleitung mit der einen Übertragungsrichtung verbunden sind, ein Arbeitsring AR und zum andern jeweils über eine Glasfaserleitung mit der anderen Übertragungsrichtung verbunden sind, ein Überwachungsring PR (für: protection ring) gebildet. Der Ringknoten RK1 läßt nähere Einzelheiten erkennen. Eine optische Signale mit unterschiedlichen Wellenlängen heranführende Glasfaserleitung GL des Arbeitsringes ist über eine Umschalteinrichtung U1 mit einem Demultiplexer DEMUX verbindbar. Der Demultiplexer führt die einzelnen optischen Signale nach Maßgabe ihrer Wellenlänge jeweiligen Tangential-Wellenleitern TWL zu. In jedem Ringknoten koppelt ein mit dem Demultiplexer verbundener Wellenleiter ein optisches Signal mit einer besonderen Wellenlänge SbW aus. Das Signal mit der besonderen Wellenlänge führt Informationen, die das Ringnetz als solches betreffen. Diese Informationen können insbesondere durch Informationen für operation and maintenance gegeben sein. Die übrigen mit dem Demultiplexer verbundenen Tangential-Wellenleiter führen Nutzinformationen und sind, wie für FIG 1 oder FIG 2 beschrieben, mit einem Multiplexer bzw. mit optische Signale dem Ringnetz zuführenden Radial-Wellenleitern bzw. von dem Ringnetz weiterleitenden Radial-Wellenleitern verbunden. Mit dem Multiplexer ist ein Wellenleiter verbunden, der ein Signal mit der besonderen Wellenlänge SbW führt. Der Multiplexer führt die ihm zugeführten optischen Signale mit unterschiedlichen Wellenlängen zu einem Gesamtsignal zusammen und ist über eine Umschalteinrichtung U2 mit einer Glasfaserleitung des Arbeitsringes verbindbar. Eine optische Signale mit unterschiedlichen Wellenlängen heranführende Glasfaserleitung des Überwachungsringes ist über eine Umschalteinrichtung U3 mit einem Demultiplexer DEMUX verbindbar. Der Demultiplexer ist mit einem das optische Signal mit der besonderen Wellenlänge aus dem Ringnetz herausführenden Wellenleiter verbunden. Im übrigen ist der Demultiplexer über jeweils ein optisches Signal mit einer einzigen Wellenlänge führende Tangential-Wellenleiter TWL mit einem Multiplexer starr verbunden. Der Multiplexer ist eingangsseitig mit einem Wellenleiter verbunden, der ein optisches Signal mit der besonderen Wellenlänge führt. Der Multiplexer ist ausgangsseitig über eine Umschalteinrichtung U4 mit einer optische Signale mit unterschiedlichen Wellenlängen führende Glasfaserleitung GL verbindbar. In jedem Ringknoten wird also einerseits sowohl aus dem Arbeitsring als auch aus dem Überwachungsring ein optisches Signal mit der besonderen Wellenlänge aus dem Ringnetz herausgeführt (drop) und andererseits ein optisches Signal mit der besonderen Wellenlänge sowohl in den Arbeitsring als auch in den Übertragungsring eingefügt (add). In jedem Ringknoten wird im Arbeitsring wie auch im Überwachungsring das jeweilige optische Signal mit der besonderen Wellenlänge auf sein Vorhandensein hin überprüft. Im Falle einer Unterbrechung der Glasfaserleitungen zwischen zwei Ringknoten empfängt der eine Ringknoten auf dem Arbeitsring und der andere Ringknoten auf dem Überwachungsring kein jeweiliges optisches Signal mit der besonderen Wellenlänge. Ein Ringknoten, der von einem benachbarten Ringknoten kein optisches Signal mit der besonderen Wellenlänge empfängt, leitet selbsttätig auf der der Unterbrechungsstelle zugewandten Seite einen Ersatzschaltvorgang ein. Ein Ersatzschaltvorgang beinhaltet eine Verbindung des Multiplexers des einen Rings mit dem Demultiplexer des anderen Rings. Werden beispielsweise in FIG 3 die Glasfaserleitungen rechts von dem Ringknoten RK1 unterbrochen, so wird der Multiplexer des Arbeitsringes über die Umschalteinrichtungen U2 und U3 mit dem Demultiplexer des Überwachungsringes verbunden; dementsprechend werden im gegebenen Fall in dem in FIG 3 rechts außen dargestellten Ringknoten RK2 der Multipexer des Überwachungsringes über die Umschalteinrichtungen U4 und U1 mit dem Demultiplexer des Arbeitsringes verbunden. Im Falle der Unterbrechung von Glasfaserleitungen zwischen zwei Ringknoten werden also in den an die Unterbrechungsstelle angrenzenden Ringknoten auf der jeweiligen der Unterbrechungsstelle zugewandten Seite der Arbeitsring mit dem Überwachungsring verbunden, wodurch ein neuer arbeitsfähiger Ring gebildet ist.

FIG 4 zeigt nähere Einzelheiten eines Ringknotens, bei dem die arbeitsring- bzw. überwachungsringspezifischen Einrichtungen mit zueinander redundanten Modulen gebildet sind. In der Figur sind oberhalb einer gestrichelten Linie das Modul MAR des Arbeitsrings sowie das dazu redundante Modul MARr des Arbeitsrings und unterhalb dieser Linie das Modul MPR des Überwachungsrings sowie das dazu redundante Modul MPRr des Überwachungsrings dargestellt. Die auf den Glasfasern des Arbeitsringes ankommenden optischen Signale unterschiedlicher Wellenlänge werden über die Umschalteinrichtung U1 und einen herkömmlichen passiven Verzweiger Sp zum einen dem Demultiplexer des Moduls des Arbeitsrings und zum andern dem Demultiplexer des redundanten Moduls des Arbeitsrings zugeführt. Aus diesen Demultiplexern wird jeweils ein Signal mit der besonderen Wellenlänge ausgekoppelt. Eine herkömmliche Auswahleinrichtung AE1, die ein optisches Signal von einem Wellenleiter auf einen anderen Wellenleiter umzuschalten vermag, führt jeweils Signale mit der besonderen Wellenlänge einem Wellenlängendetektor WD1 zu. Der Wellenlängendetektor WD1 überwacht das Vorhandensein des Signals mit der besonderen Wellenlänge. Für den Fall, daß das Signal mit der besonderen Wellenlänge nicht detektiert werden kann, veranlaßt der Wellenlängendetektor WD1 die Auswahleinrichtung AE1, auf das von dem jeweils anderen Modul ausgekoppelte Signal mit der besonderen Wellenlänge umzuschalten. Ein optisches Signal mit einer anderen Wellenlänge wird entweder sowohl in dem Modul des Arbeitsringes als auch in dem Modul des Überwachungsringes von dem zugehörigen Demultiplexer über die Schalteinrichtungen S7 und S8 bzw. über die Schalteinrichtungen S10 und S11 dem zugehörigen Multiplexer zugeführt oder über die Schalteinrichtung S7 bzw. S10 und die Auswahleinrichtung AE2 zu dem Wellenlängendetektor WD2 aus dem Ringnetz ausgekoppelt. Für den Fall, daß der Wellenlängendetektor WD2 das Signal mit der anderen Wellenlänge nicht detektiert, veranlaßt er die Auswahleinrichtung AE2, auf das von dem jeweils anderen Modul des Arbeitsringes gelieferte Signal umzuschalten. Für den Fall, daß das Signal mit der anderen Wellenlänge aus dem Ringnetz ausgekoppelt wird, kann ein neues Signal mit der anderen Wellenlänge über die Zuführeinrichtung ZE1 entweder via die Schalteinrichtung S8 oder via die Schalteinrichtung S11 in das Ringnetz eingekoppelt werden. Über die Zuführeinrichtung ZE2 wird ein Signal mit der besonderen Wellenlänge über jeweils einen der Multiplexer der Module des Arbeitsringes in das Ringnetz eingekoppelt. Die einander entsprechenden Schalteinrichtungen S7, S10 bzw. S8, S11 in den zueinander redundanten Modulen werden, wie durch gestrichelte Linien angedeutet, gleichsinnig geschaltet. Ein optisches Signal mit einer weiteren Wellenlänge wird entweder in dem Modul des Arbeitsringes oder in dem dazu redundanten Modul des Arbeitsringes von dem zugehörigen Demultiplexer über die Schalteinrichtung S9 bzw. über die Schalteinricht S12 dem zugehörigen Multiplexer zugeführt. Im übrigen sind in jedem Modul der Demultiplexer mit dem zugehörigen Multiplexer, wie für FIG 1 bzw. für FIG 2 beschrieben, verbindbar. Das Modul MPR des Überwachungsrings und das dazu redundante Modul sind prinzipiell gleich aufgebaut wie die Module des Arbeitsringes. Abweichend von den Modulen des Arbeitsringes erfolgt in den Modulen des Überwachungsringes-neben der Herausleitung bzw. der Zuführung eines Signales mit der besonderen Wellenlänge - eine ausschließliche Durchschaltung von Nutzsignalen in den Modulen. In den Modulen des Überwachungsringes sind die zugehörigen Demultiplexer mit den zugehörigen Multiplexern für jede Wellenlänge über einen Tangential-Wellenleiter und eine Schalteinrichtung (S13 ... S16) verbindbar. Die Multiplexer in den einzelnen Modulen führen die ihnen eingangsseitig zugeführten einzelnen optischen Signale zu jeweils einem Gesamtsignal zusammen. Die Multiplexer des Arbeitsringes und des Überwachungsringes sind jeweils über einen Wellenlängendetektor mit einem herkömmlichen Kombinierer KOM verbunden. Der Kombinierer ist über eine Umschalteinrichtung U2 bzw. U4 mit einer optische Signale von dem Ringknoten weiterleitenden Glasfaserleitung verbunden. Die mit den Multiplexern verbundenen Wellenlängendetektoren überwachen jeweils die von dem zugehörigen Modul abgegebenen Wellenlängen und veranlassen beim Ausfall einer bestimmten Wellenlänge die alleinige Durchschaltung dieser Wellenlänge in dem jeweils anderen Modul. Zur alleinigen Durchschaltung werden die einander entsprechenden Schalteinrichtungen, z.B. S9, S12 bzw. S13, S15 bzw. S14, S16, in zueinander redundanten Modulen, wie durch gestrichelte Linien angedeutet, gegengleich geschaltet.

Die Rekonfiguration eines Ringnetzes mit Ringknoten nach FIG 4 bei Unterbrechung der Glasfaserleitungen zwischen zwei benachbarten Ringknoten erfolgt entsprechend der für FIG 3 beschriebenen Weise. Abweichend hiervon wird erst dann von einer Unterbrechung der betreffenden Glasfaserleitung ausgegangen, wenn der zugehörige Wellenlängendetektor WD1 bzw. WD3 über keine der beiden Schaltstellungen der zugehörigen Auswahleinrichtung AE1 bzw. AE3 ein Signal mit der besonderen Wellenlänge empfängt.

Die Erfindung wurde insoweit lediglich am Beispiel eines unidirektionalen Ringnetzes beschrieben, worauf sie jedoch nicht beschränkt ist. Eine Weiterbildung ist durch ein bidirektionales Ringnetz gegeben, das zwei Arbeitsringe mit gegenläufiger Übertragungsrichtung und zugehörige Überwachungsringe mit gegenläufigen Übertragungsrichtungen aufweist. Bei einem bidirektionalen Ringnetz mit weils einem Arbeitsring und einem zugehörigen, eine gegenläufige Übertragungsrichtung aufweisenden Überwachungsring kommen die für ein unidirektionales Ringnetz beschriebenen Maßnahmen sinngemäß zur Anwendung.

## Patentansprüche

1. Optisches Ringnetz mit einer Mehrzahl von Ringknoten, bei dem
- ein Arbeitsring (AR) dadurch gebildet ist, daß benachbarte Ringknoten (RK) jeweils über eine optische Signale mit unterschiedlichen Wellenlängen in der einen Übertragungsrichtung führende Glasfaserleitung (GL) verbunden sind,
- ein Überwachungsring (PR) dadurch gebildet ist, daß benachbarte Ringknoten jeweils über eine optische Signale mit unterschiedlichen Wellenlängen in der anderen Übertragungsrichtung führende Glasfaserleitung verbunden sind,
- in einem Ringknoten der Arbeitsring über Umschalteinrichtungen (U) mit dem Überwachungsring verbindbar ist,
**dadurch gekennzeichnet, daß**
- in dem Ringknoten des Arbeitsringes das optische Signale an dem Ringknoten heranführende Ende der Glasfaserleitung des Arbeitsringes über eine erste Umschalteinrichtung (U1) mit dem Eingang eines Demultiplexers (DEMUX) verbindbar ist,
- der Demultiplexer des Arbeitsringes ausgangsseitig mit einem ein optisches Signal mit einer besonderen Wellenlänge (SbW) aus dem Ringnetz weiterleitenden Wellenleiter (RWLW) verbunden ist,
- der Demultiplexer des Arbeitsringes ausgangsseitig über die restlichen Wellenlängen individuell führende Wellenleiter wahlfrei mit einem Multiplexer (MUX) des Arbeitsringes und mit jeweils ein optisches Signal einer einzigen Wellenlänge aus dem Ringnetz weiterleitenden Wellenleitern (RWLW) verbindbar ist,
- der Multiplexer des Arbeitsringes eingangsseitig mit einem ein optisches Signal mit der besonderen Wellenlänge (SbW) von außerhalb des Ringnetzes zuführenden Wellenleiter verbunden ist,
- der Multiplexer des Arbeitsringes eingangsseitig über die restlichen Wellenlängen individuell führende Wellenleiter wahlfrei mit dem Demultiplexer oder mit optische Signale an das Ringnetz zuführenden Wellenleitern (RWLZ) verbindbar ist,
- der Multiplexer des Arbeitsringes ausgangsseitig über eine zweite Umschalteinrichtung (U2) mit dem optische Signale weiterleitenden Ende einer Glasfaserleitung des Arbeitsringes verbindbar ist,
- in dem Ringknoten das optische Signal an einen Ringknoten heranführende Ende einer Glasfaserleitung des Überwachungsringes über eine dritte Umschalteinrichtung (U3) mit dem Eingang eines Demultiplexers des Überwachungsringes verbindbar ist,
- der Demultiplexer des Überwachungsringes ausgangsseitig mit einem ein optisches Signal mit der besonderen Wellenlänge aus dem Ringnetz weiterleitenden Wellenleiter verbunden ist,
- der Demultiplexer des Überwachungsringes ausgangsseitig über die die restlichen Wellenlängen führenden Wellenleiter mit einem Multiplexer des Überwachungsringes verbunden ist,
- der Multiplexer des Überwachungsringes eingangsseitig mit einem ein optisches Signal mit der besonderen Wellenlänge von außerhalb des Ringnetzes zuführenden Wellenleiter verbunden ist,
- der Multiplexer des Überwachungsringes über eine vierte Umschalteinrichtung (U4) mit dem optische Signale weiterleitenden Ende einer Glasfaserleitung des Überwachungsringes verbindbar ist,
- in dem Ringknoten der Multiplexer des Arbeitsringes über die zweite Umschalteinrichtung und die dritte Umschalteinrichtung mit dem Demultiplexer des Überwachungsringes verbindbar ist,
- in dem Ringknoten der Multiplexer des Überwachungsringes über die vierte Umschalteinrichtung und die erste Umschalteinrichtung mit dem Demultiplexer des Arbeitsringes verbindbar ist.

2. Optisches Ringnetz nach Anspruch 1,
**dadurch gekennzeichnet, daß**
- ein Demultiplexer und ein Multiplexer, der eingangsseitig über jeweils ein Signal einer einzigen Wellenlänge führende Wellenleiter mit dem Demultiplexer verbindbar und der ausgangsseitig mit einem Wellenlängendetektor verbunden ist, ein Modul bilden,
- in einem Ringknoten für den Arbeitsring und für dem Überwachungsring jeweils redundante Module vorgesehen sind, die ringindividuell eingangsseitig über eine Verzweigungseinrichtung (Sp) und über eine Umschalteinrichtung (U) mit einer optische Signale unterschiedlicher Wellenlänge dem Ringknoten zuführenden Glasfaserleitung und die ringindividuell ausgangsseitig über eine Kombinationseinrichtung (KOM) und über eine Umschalteinrichtung (U2, U4) mit einer optische Signale mit unterschiedlichen Wellenlängen von dem Ringknoten weiterleitenden Glasfaserleitung verbunden sind,
- die Signale derselben Wellenlänge aus dem Ringnetz herausführenden Wellenleiter ringindividuell über eine Auswahleinrichtung (AE) und einen Wellenlängendetektor (WD) mit einem ein Signal der jeweiligen Wellenlänge von dem Ringnetz weiterleitenden Wellenleiter verbindbar sind,
- ein dem Ringnetz ein Signal einer jeweiligen Wellenlänge zuführender Wellenleiter über eine Zuführungseinrichtung (ZE) jeweils nur einem von redundanten Modulen verbindbar ist,
- in einem Modul der Demultiplexer über eine Hintereinanderschaltung eines ein Signal einer einzigen Wellenlänge führenden Wellenleiters und einer Schalteinrichtung (S) mit dem Multiplexer verbindbar ist.

3. Verfahren zum Betrieb eines Ringnetzes nach Anspruch 1 oder 2,
**dadurch gekennzeichnet, daß**
- in jedem Ringknoten ringindividuell das Vorhandensein des Signals mit der besonderen Wellenlänge auf der dem Ringknoten Signale unterschiedlicher Wellenlängen zuführenden Glasfaserleitung überwacht wird,
- bei einer Unterbrechung des Signals mit der besonderen Wellenlänge in dem betroffenen Ringknoten auf der der Unterbrechung zugewandten Seite der Arbeitsring mit dem Überwachungsring verbunden wird.

4. Verfahren nach Anspruch 3,
**dadurch gekennzeichnet, daß**
- der Arbeitsring nur dann mit dem Überwachungsring verbunden wird, wenn in keinem der redundanten Modulen das Signal mit der besonderen Wellenlänge detektiert wird.

5. Verfahren nach einem der Ansprüche 3 bis 4,
**dadurch gekennzeichnet, daß**
ein Signal derselben Wellenlänge nur in einem der redundanten Modulen durchgeschaltet wird und bei Detektion eines Nichtvorhandenseins dieses Signals am Ausgang eines Moduls eine Durchschaltung dieses Signals für das jeweils andere Modul bewirkt wird.

6. Verfahren nach einem der Ansprüche 3 bis 5,
**dadurch gekennzeichnet, daß**
ein aus dem Ringnetz herauszuleitendes Signal in dem zugehörigen Wellenlängendetektor auf das Vorhandensein hin überwacht wird und im Falle einer Nicht-Detektion des betreffenden Signals eine Umschaltung der zugehörigen Auswahleinrichtung auf das jeweils andere Modul bewirkt wird.

## Claims

1. Optical ring network having a number of ring nodes, in which
- a working ring (AR) is formed such that adjacent ring nodes (RK) are each connected via a glass fibre line (GL) which carries optical signals at different wavelengths in the one transmission direction,
- a monitoring ring (PR) is formed such that adjacent ring nodes are each connected via a glass fibre line which carries optical signals at different wavelengths in the other transmission direction,
- in one ring node, the working ring can be connected to the monitoring ring via switching devices (U),
**characterized in that**
- in the ring node of the working ring, that end of the glass fibre line of the working ring which passes optical signals to the ring node can be connected via a first switching device (Ul) to the input of a demultiplexer (DEMUX),
- the demultiplexer of the working ring is connected on the output side to a waveguide (RWLW) which passes an optical signal at one particular wavelength (SbW) out of the ring network,
- the demultiplexer of the working ring can be connected on the output side via waveguides, which
- the multiplexer for the monitoring ring can be connected via a fourth switching device (U4) to that end of a glass fibre line of the monitoring ring which passes on the optical signals,
- in the ring node, the multiplexer of the operating ring can be connected via the second switching device and the third switching device to the demultiplexer for the monitoring ring,
- in the ring node, the multiplexer for the monitoring ring can be connected via the fourth switching device and the first switching device to the demultiplexer for the working ring.

2. Optical ring network according to Claim 1,
**characterized in that**
- a demultiplexer and a multiplexer, which can be connected to the demultiplexer on the input side via in each case one waveguide which carries a signal at a single wavelength, and which is connected on the output side to a wavelength detector, form a module,
- redundant modules are in each case provided in a ring node for the working ring and for the monitoring ring and are connected on a ring-specific basis on the input side via a branching device (Sp) and via a switching device (U) to a glass fibre line which supplies optical signals at a different wavelength to the ring node, and which are connected on a ring-specific basis on the output side via a combination device (KOM) and via a switching device (U2, U4) to a glass fibre line which passes on optical signals at different wavelengths from the ring node,
- the waveguides which carry signals at the same wavelength out of the ring network can be connected on a ring-specific basis via a selection device (AR) and a wavelength detector (WD) to a waveguide which passes on a signal at the respective wavelength from the ring network,
- a waveguide which supplies the ring network with a signal at the respective wavelength can be connected via a supply device (ZE) to in each case only one of the redundant modules,
- in one module, the demultiplexer can be connected to the multiplexer via a switching device (S) and a waveguide, which carries a signal at a single wavelength, connected in series.

3. Method for operating a ring network according to Claim 1 or 2,
**characterized in that**
- the presence of the signal at the particular wavelength on the glass fibre line which supplies the ring node with signals at different wavelengths is monitored on a ring-specific basis in each ring node,
- in the event of an interruption of the signal at the particular wavelength in the relevant ring node, the working ring is connected to the monitoring ring on the side facing the interruption.

4. Method according to Claim 3,
**characterized in that**
- the working ring is connected to the monitoring ring only when the signal at the particular wavelength is not detected in any of the redundant modules.

5. Method according to one of Claims 3 or 4,
**characterized in that**
a signal at the same wavelength is passed on in only one of the redundant modules, and, on detection that this signal is not present at the output of one module, this signal is passed on for the respective other module.

6. Method according to one of Claims 3 to 5,
**characterized in that**
a signal which is to be passed out of the ring network is monitored for its presence in the associated wavelength detector and, if the relevant signal is not detected, the associated switching device is switched to the respective other module.

## Revendications

1. Réseau optique en anneau avec une pluralité de noeuds d'anneau, dans lequel
- un anneau de travail (AR) est réalisé du fait que des noeuds d'anneau (RK), voisins, sont connectés chacun à une ligne à fibre optique (GL) conduisant des signaux optiques de longueurs d'ondes différentes dans une direction de transmission;
- un anneau de protection (PR) est réalisé du fait que des noeuds d'anneau, voisins, sont connectés chacun à une ligne à fibre optique conduisant des signaux optiques de longueurs d'ondes différentes dans l'autre direction de transmission;
- l'anneau de travail est connectable, dans un noeud d'anneau, à l'anneau de protection via des dispositifs commutateurs (U),
**caractérisé en ce que**
- dans le noeud d'anneau de l'anneau de travail, l'extrémité de la ligne à fibre optique dudit anneau de travail, amenant des signaux optiques au noeud d'anneau, est connectable à l'entrée d'un démultiplexeur (DEMUX) via un premier dispositif commutateur (U1);
- le démultiplexeur de l'anneau de travail est connecté, côté sortie, à un guide d'ondess (RWLW) acheminant un signal optique, qui a une longueur d'onde particulière (SbW), venant du réseau en anneau;
- le démultiplexeur de l'anneau de travail est librement connectable, côté sortie, via des guides d'ondes conduisant individuellement les longueurs d'ondes restantes, à un multiplexeur (MUX) dudit anneau de travail et à des guides d'ondes acheminant chacun un signal optique ayant une longueur d'onde unique et venant du réseau en anneau;
- le multiplexeur de l'anneau de travail est connecté, côté entrée, à un guide d'ondes amenant, depuis l'extérieur du réseau en anneau, un signal optique ayant la longueur d'onde particulière (SbW);
- le multiplexeur de l'anneau de travail est librement connectable, côté entrée, via des guides d'ondes conduisant individuellement les longueurs d'ondes restantes, au démultiplexeur ou aux guides d'ondes (RWLZ) amenant des signaux optiques au réseau en anneau;
- le multiplexeur de l'anneau de travail est connectable, côté sortie, via un deuxième dispositif inverseur (U2), à l'extrémité d'une ligne à fibre optique de l'anneau de travail, acheminant des signaux optiques;
- dans le noeud d'anneau, l'extrémité d'une ligne à fibre optique de l'anneau de protection, amenant le signal optique à un noeud d'anneau, est connectable à l'entrée d'un démultiplexeur de l'anneau de protection via un troisième dispositif commutateur (U3);
- le démultiplexeur de l'anneau de protection est connecté, côté sortie, à un guide d'ondes acheminant un signal optique ayant la longueur d'onde particulière au départ du réseau en anneau;
- le démultiplexeur de l'anneau de protection est connecté, côté sortie, à un multiplexeur dudit anneau de protection via les guides d'ondes conduisant les longueurs d'ondes restantes;
- le multiplexeur de l'anneau de protection est connecté, côté entrée, à un guide d'ondes amenant, depuis l'extérieur du réseau en anneau, un signal optique ayant la longueur d'onde particulière;
- le multiplexeur de l'anneau de protection est connectable, via un quatrième dispositif commutateur (U4), à l'extrémité d'une ligne à fibre optique dudit anneau de protection, laquelle achemine des signaux optiques;
- dans le noeud d'anneau, le multiplexeur de l'anneau de travail est connectable, via le deuxième dispositif commutateur et le troisième dispositif commutateur, au démultiplexeur de l'anneau de protection;
- dans le noeud d'anneau, le multiplexeur de l'anneau de protection est connectable, via le quatrième dispositif commutateur et le premier dispositif commutateur, au démultiplexeur de l'anneau de travail.

2. Réseau optique en anneau selon la revendication 1, **caractérisé en ce que**
- un démultiplexeur et un multiplexeur forment un module, le multiplexeur étant connectable, côté entrée, audit démultiplexeur via des guides d'ondes conduisant chacun un signal de longueur d'onde unique et connecté, côté sortie, à un détecteur de longueur d'ondes;
- dans un noeud d'anneau sont prévus, pour l'anneau de travail et pour l'anneau de protection, des modules redondants, ces modules étant connectés, côté entrée, individuellement pour chaque anneau et via un dispositif répartiteur (Sp) ainsi que par l'intermédiaire d'un dispositif commutateur (U), à une ligne à fibre optique amenant des signaux optiques de longueurs d'ondes différentes au noeud d'anneau et, côté sortie, individuellement pour chaque anneau et via un dispositif combinateur (KOM) ainsi que par l'intermédiaire d'un dispositif commutateur (U2, U4), à une ligne à fibre optique acheminant des signaux optiques de longueurs d'ondes différentes venant du noeud d'anneau;
- les guides d'ondes extrayant des signaux de même longueur d'onde du réseau en anneau sont connectables, individuellement pour chaque anneau et via un dispositif de sélection (AE) ainsi que par l'intermédiaire d'un détecteur de longueur d'ondes (WD), à un guide d'ondes acheminant un signal de la longueur d'onde respective venant du réseau en anneau;
- chaque guide d'ondes amenant au réseau en anneau un signal d'une certaine longueur d'onde est connectable via un dispositif d'amenée (ZE) à un seul des modules redondants uniquement;
- dans un module, le démultiplexeur est connectable au multiplexeur via un montage en série comprenant un guide d'ondes conduisant un signal d'une longueur d'onde unique et un dispositif de commutation (S).

3. Procédé d'opération de réseau en anneau selon la revendication 1 ou 2,
**caractérisé en ce que**
- dans chaque noeud d'anneau et individuellement pour chaque anneau, il est contrôlé que le signal ayant la longueur d'onde particulière est présent dans la ligne à fibre optique amenant au noeud d'anneau des signaux de longueurs d'ondes différentes;
- en cas d'interruption du signal ayant ladite longueur d'onde particulière, l'anneau de travail est connecté à l'anneau de protection, dans le noeud d'anneau concerné, du côté tourné vers l'interruption.

4. Procédé selon la revendication 3, **caractérisé en ce que**
- l'anneau de travail n'est connecté à l'anneau de protection que si le signal ayant la longueur d'onde particulière n'est détecté dans aucun des modules redondants.

5. Procédé selon l'une des revendications 3 à 4, **caractérisé en ce qu'**un signal ayant la même longueur d'onde n'est commuté que dans l'un des modules redondants et **en ce que**, en cas de détection de l'absence dudit signal, à la sortie d'un module, une commutation de ce signal est provoquée pour l'autre module correspondant.

6. Procédé selon l'une des revendications 3 à 5, **caractérisé en ce que** la présence d'un signal à extraire du réseau en anneau est contrôlée dans le détecteur de longueur d'ondes associé et **en ce qu'**est provoquée une commutation du dispositif de sélection associé sur chaque autre module correspondant en cas de non détection du signal concerné.
